(19) Europäisches Patentamt
European Patent Office
Office européen des brevets

(11) **EP 2 182 384 A1**

(12) **EUROPEAN PATENT APPLICATION**

(43) Date of publication:
**05.05.2010 Bulletin 2010/18**

(51) Int Cl.:
***G01S 13/90*** *(2006.01)*

(21) Application number: **08425698.1**

(22) Date of filing: **30.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **GAP S.r.l.**
**70126 Bari (IT)**

(72) Inventors:
• **Bovenga, Fabio**
**70126 Bari (IT)**

• **Guerriero, Luciano**
**70126 Bari (IT)**
• **Nutricato, Raffaele**
**70126 Bari (IT)**
• **Refice, Alberto**
**70126 Bari (IT)**

(74) Representative: **Trupiano, Federica et al**
**Marietti, Gislon e Trupiano S.r.l.**
**Via Larga, 16**
**20122 Milano (IT)**

(54) **Method for processing sar images**

(57)    Described herein is a method for processing SAR images generated by successive acquisitions, wherein the interferometric phase (Φ) includes at least one first contribution that represents the information of terrain height, and at least one second contribution that represents the variation of height with respect to the time that elapses between two successive interferometric acquisitions, as well as other contributions that represent the artefacts due to atmospheric inhomogeneities, to the limited precision with which the orbital parameters of the successive acquisitions are known, and to the phase variation depending upon processing errors. The method envisages linearization of the models used to estimate each of the contributions mentioned above.

Fig. 1

EP 2 182 384 A1

**Description**

Field of the Invention

The present invention relates to a method for the analysis of data acquired with Synthetic-Aperture-Radar (SAR) sensors in interferometric mode in order to identify areas of instability of the ground and, specifically, a method of analysis that is particularly suitable for being adopted where the characteristics of surface coverage entail a low level of coherence of the signal.

In said conditions, the use of techniques of multi-temporal interferometric analysis can prove problematical and there is consequently the need for a methodology that is robust in regard to the low signal-to-noise ratio (SNR), which is effective in identifying possible signals of instability and is able to recognize and reject possible artefacts.

Prior Art

In a SAR image generated by successive acquisitions, the interferometric phase ($\Phi$) is given in general by the relation:

$$\Phi = \angle \left( SAR_1 \cdot \left( SAR_2 \right)^* \right) = \frac{4\pi}{\lambda} \left( \frac{B_g}{r_0 \sin\theta} \cdot h + \frac{dh}{dt} \cdot B_t \right) + \phi^{atm} + \phi^{orb} + \phi^{proc}$$

The interferometric phase is hence defined as the sum of different contributions, where:

$$\frac{B_g}{r_0 \sin\theta} \cdot h$$

represents the information of terrain height and depends upon the geometrical distance Bg between the two sensors;

$$\frac{dh}{dt} \cdot B_t$$

represents the variation of height with respect to time and depends upon the distance in time between the two acquisitions $B_t$; and

$$\phi^{atm}, \quad \phi^{orb} \quad \text{and} \quad \phi^{proc}$$

represent the contributions of the artefacts due respectively to the phase variation depending upon atmospheric inhomogeneities, to the phase variation depending upon the limited precision with which the orbital parameters of the successive acquisitions are known and to the phase variation depending upon processing errors,

$B_t$ represents the time that separates two successive interferometric acquisitions, and

Bg is the spatial distance between the positions of the sensors during two successive interferometric acquisitions.

The estimation procedure is based upon the properties of the interferometric SAR signal generated with successive acquisitions with different values of $B_t$ and Bg. The interferometric phase $\Phi$ hence registers the following contributions:

- the information of terrain height, which depends linearly upon Bg;
- the possible variation in height between the two successive acquisitions, which depends upon $B_t$;
- the phase variation $\phi^{atm}$, which depends upon atmospheric inhomogeneities;

- artefacts $\phi^{proc}$ of the interferometric phase that depend upon processing errors; and
- artefacts $\phi^{orb}$ linked to the limited precision with which the orbital parameters of the acquisitions are known.

The known techniques of multi-temporal interferometric analysis have as target the estimation of the contributions listed above, adopting accurate mathematical models, with which adaptations on the data available are performed. In said conditions, it is possible to arrive to the following conclusions:

- the quality of the results obtained depends upon the quality of the models adopted; and
- the quality of the results obtained depends upon the reliability of the estimates of the parameters of the models adopted and consequently upon the number of independent measurements available.

It hence follows that the main disadvantages of the known techniques are:

- difficulty in applying the techniques in areas with low level of the signal-to-noise ratio, where the presence of just a few measurements renders the estimate of complex models impossible or unreliable; and
- the complexity of the models used entails a very high computational cost.

It should moreover be considered that said techniques, in general, are presented in the literature without a procedure of quantitative control of the quality of the results obtained so that any possible artefacts in the results are erroneously taken into consideration as real signals. The presence of the artefacts is in general linked to two main causes:

- the complexity of the algorithms involved leads to the use of approximations or fast estimation procedures of the parameters and consequently to the search for local solutions to the problem;
- even though there are available accurate models, not always is it possible to separate precisely the various contributions present in the interferometric phase. This entails, for each particular algorithm used, a certain degree of arbitrariness in this separation, which, if it is not carried out properly, produces results not corresponding to what actually occurs on the ground.

An example of a known method for processing SAR signals is provided by the international patent application No. WO 2008/116058, where it is proposed to subject the detected interferograms to processing by means of an algorithm of anisotropic diffusion in order to obtain a complex value for each pixel, and then to apply a filter of a "shock" type to the interferogram.
The international patent application No. WO 00/72045 relates more directly to processing of images obtained by means of SAR surveys for determining movements in terrains or the like. In particular, following upon processing, reference points PS (Permanent Scatterers) are identified, which show a coherent response in time.

Summary of the Invention

This having been said, an object of the present invention is to propose a method for processing SAR images that will enable significant results to be obtained also in conditions of low level of the signal-to-noise ratio without loss of quality in the estimation of the contributions of the interferometric phase.
Another object of the present invention is to propose a method of the type referred to above that will enable tests of reliability of the results obtained to be carried out.
The above objects are achieved by the present invention thanks to a method according to Claim 1, which envisages in particular linearization of the models used for estimating each of the contributions of the interferometric phase.
The idea underlying the method is hence the linearization of the models used for estimating the various contributions of the interferometric phase. This involves the definition of the ranges of values within which the deviation between the non-linear models and their linearized version is negligible.
The main advantages of the method according to the invention is can be summarized as indicated hereinafter:

- linearization requires the availability of just a few measurements since the number of parameters to be estimated is minimal. In theory, two measurements are sufficient for estimating a straight line and three for estimating a plane;
- the computational cost of linear estimations is very low;
- the simplicity of the mathematical formulation opens various scenarios of implementation of the algorithm (for example, techniques based upon genetic algorithms, or techniques based upon tiled architectures, where grids of processors with low computational capacity and with low power consumption are able to perform the same algorithm but on different data).

The need to work in areas with low signal-to-noise ratio renders of primary importance the use of an algorithm capable of:

- supplying the maximum number of reliable measurements; and
- eliminating all the artefacts generated during the estimation of the various contributions of the interferometric phase.

Finally, it is to be noted that the method of the present invention can also be applied successfully in areas with medium or high signal-to-noise ratio. It follows that the method not only provides a solution to the problem of studying, with SAR interferometric techniques, areas with low signal-to-noise ratio, but is also a valid alternative to methods and algorithms of a known type.

Brief Description of the Drawings

Further characteristics and advantages of the present invention will emerge more clearly from the ensuing description, provided by way of non-limiting illustration with reference to the attached drawings, wherein:

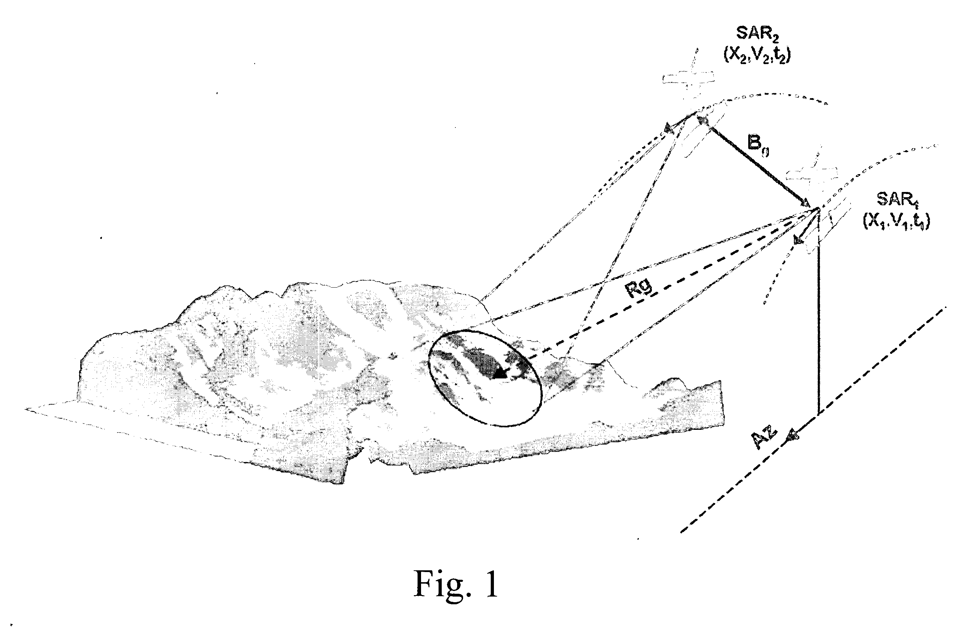

- Figure 1 is a schematic view that represents the typical configuration of interferometric acquisition.

Modes for Carrying Out the Invention

With reference to the schematic representation of Figure 1, where for simplicity two events of interferometric acquisition are assumed, $B_t$ is the time that separates the two interferometric acquisitions ($B_t = t_2 - t_1$), Bg is the spatial distance between the positions of the two sensors, Az the azimuthal direction defined by the path of flight of the sensor, and Rg the direction of "slant range" defined by the average angle of observation of the sensor and orthogonal to the direction Az.

The method according to the present invention basically requires, in the first place, a process of linearization of the models that represent the contributions of the interferometric phase and, in the second place, the process of estimation of the parameters associated to the linearized models.

The linearization process envisages in the first place that the contributions due to the various artefacts $\phi^{atm}$, $\phi^{orb}$ and $\phi^{proc}$ will be considered as a single contribution to the interferometric phase. In fact, for the algorithm adopted in the method according to the present invention, said contributions all represent a single contribution of noise to be removed, and hence a separate estimation of said contributions is not performed.

The single contribution of the artefacts thus determined is considered uncorrelated in time, whilst its evolution in space {Az, Rg} on limited areas (for example, within areas not larger than 2 km x 2 km) can be approximated with a phase plane.

It should moreover be assumed that the information of terrain height depends linearly upon Bg, whilst the variation of terrain height as a function of $B_t$ is not linear, but can be modelled as a broken line.

The number of lengths depends upon the number of acquisitions available. In general, for a number of acquisitions lower than 20 images, it is possible to proceed to a purely linear approximation. With a number of images equal to approximately 40, it is instead possible to carry out a two-lengths linearization. With a number of images higher than 50, it is possible to carry out a three-lengths linearization.

The presence of points with deformations that do not respect said model do not introduce any error during processing of the data even if this entails a reduction of the likelihood of identifying a particular area as an area that presents movement.

On these hypotheses, the algorithm adopted for performing the linearization envisages in the first place the division of the observation frame of the interferograms acquired in areas $A_j$ of reduced dimensions. All the processing steps that follow must be understood as carried out in parallel on each area $A_j$.

There is then performed the selection of a certain number L of working sets, where L is preferably greater than or equal to 2. In the case where just one working set (L = 1) is used, not all the subsequent steps would be applicable and, consequently, the quality of the results obtained could be lower than the desired optimal levels.

For simplicity of exposition, reference will be made in what follows to just two working sets $\Phi^k_{mk}$, hence considering k={1, 2}, $m_1=1:N_1$, $m_2=1:N_2$, but the same considerations may be readily applied also to the cases where more than two working sets are considered.

Each of the working sets preferably includes a number of interferograms higher than fifteen. The working sets must be independent, i.e., constituted by interferograms detected according to different possible modalities, for example with acquisitions made by different SAR sensors operating with same type of platform (satellite or aeroplane) and at a similar carrier frequency and bandwidth, or else with acquisitions made by one and the same sensor but with different acquisition modes, or else constituted also by a subset of acquisitions made by one and the same sensor using the same modality. The sensors can be arranged on any means, hence not only a satellite that performs orbits around the globe, but also an aeroplane or any other similar means.

The working sets are moreover chosen in such a way that the distance in time $B_t$ and the geometrical distance Bg are not correlated.

After selection of the working sets, there is then performed the estimation of the parameters that define the linear model in the four-dimensional space {Rg, Az, $B_t$, Bg}. For simplicity, reference will be made in what follows to the simplest case of two working sets.

The estimation of the parameters involves execution of the steps illustrated hereinafter for each of the two sets $\Phi^k_{mk}$, namely:

i) calculation of the phase differences between pairs of close pixels within a predefined value of distance. Said value is defined, for example, on the basis of the desired product "*computational cost * maximization of number of reliable pairs*". In order to reduce the number of pairs to be analysed, it is possible to reject beforehand some pixels of the images, using, for example, criteria based upon the information of the amplitude of the image or upon information of classification of the area being studied (areas with vegetation, presence of building works, presence of rocks, presence of built-up areas);

ii) division of the range of analysis $B^k_g$ and $B^k_t$ into superimposed sub-windows;

iii) joint estimation of the difference in height and of its variation;

iv) identification of the pairs of pixels for which the estimation of the differences of height for the different sub-windows is invariant;

v) for each interferogram, estimation of the planes in the space {Az, Rg}, performed using the pixels identified in step i) and attribution of a weight Y(mk) as a function of the quality of the estimate;

vi) removal of the possible artefacts present in the previous estimate through estimation and removal of linear evolutions of the coefficients of the planes along $B_t$ and Bg optimized as a function of the weights Y(mk);

vii) subtraction of the planes in the space {Az, Rg} from the interferograms;

viii) for each of the two sets $\Phi^k_{mk}$ and for each pixel, joint estimation of the height (q) and of its variation (dq) performed by means of the estimate on sub-windows of a broken linear evolution along $B_t$ and of a linear evolution along Bg;

ix) selection of the points that present invariant estimates of the heights for the different sub-windows;

x) for each point P(Rg,Az) identified in step ix), construction of a neighbourhood within which the standard deviation of the estimates of dq (*stddev*(dq)) performed on the points selected in step ix) and belonging to the neighbourhood is assessed;

xi) attribution to each point P of a weight w(P) that is a function of 1/*stddev*(dq);

xii) comparison of the fields of deformation def$_1$ and def$_2$ obtained for the two sets $\Phi^k_{mk}$ starting from the estimates of dq;

xiii) generation of the field def = p$_1$·def$_1$ + p$_2$·def$_2$, where p$_k$ are weights that depend upon the weights w(P) estimated in step xi), upon how much the fields of deformation depart from a linear model in the space {Az, Rg}, thus eliminating the artefacts linked to linearization, and upon the difference between them; in particular, in order to prevent artefacts, it is necessary for the fields def$_1$ and def$_2$ to be equal; in the case where there are differences, these are the evidence of errors in estimation of the parameters linked to an insufficient number of pixels selected in step i) or to the high power of the atmospheric signal;

xiv) subtraction, from the interferograms, of the signal of the fields of deformation and height.

Steps v) to xiv) are then reiterated until the solutions obtained at the n-th iteration differ from the solutions obtained at the (n-1)-th iteration by an amount lower than a pre-set threshold.

The goodness of the solution found depends directly upon the weights p$_k$ obtained in the last iteration, thus yielding also an indication of the reliability of the results obtained.

*A-priori* knowledge of information linked to the topography or to the field of deformation may be advantageously used, in the processing method described, through the removal of said contributions from the interferograms before execution of step i).

**Claims**

1. A method for processing SAR images generated by successive acquisitions, wherein the interferometric phase ($\Phi$) is given by the relation:

$$\Phi = \angle\left(SAR_1 \cdot (SAR_2)^*\right) = \frac{4\pi}{\lambda}\left(\frac{B_g}{r_0\sin\theta}\cdot h + \frac{dh}{dt}\cdot B_t\right) + \phi^{atm} + \phi^{orb} + \phi^{proc}$$

wherein the following contributions are present:

$$\frac{B_g}{r_0\sin\theta}\cdot h$$

which represents the information of terrain height and depends upon the geometrical distance Bg between the positions of two successive acquisitions;

$$\frac{dh}{dt}\cdot B_t$$

which represents the variation of height with respect to time calculated in the range of time $B_t$ that elapses between two successive interferometric acquisitions; and

$$\phi^{atm}, \quad \phi^{orb} \quad \text{and} \quad \phi^{proc}$$

which represent the contributions of the artefacts due, respectively, to the phase variation depending upon atmospheric inhomogeneities, to the phase variation depending upon the limited precision with which the orbital parameters of the successive acquisitions are known, and to the phase variation depending upon processing errors, said method being **characterized in that** it envisages linearization of the models used for estimating each of said contributions.

2. The method according to Claim 1, wherein the contributions of the artefacts $\phi^{atm}$, $\phi^{orb}$ and $\phi^{proc}$ are considered as a single contribution of noise.

3. The method according to Claim 2, wherein said single contribution of noise is uncorrelated in time.

4. The method according to Claim 2, wherein the evolution in space of said single contribution of noise is approximated with a phase plane.

5. The method according to Claim 1, wherein the contribution of the information of terrain height is considered as linearly dependent upon the geometrical distance Bg.

6. The method according to Claim 1, wherein the contribution of the variation of terrain height as a function of the distance in time $B_t$ is approximated with a broken line with one or more linear lengths.

7. The method according to Claim 1, wherein the frame of observation of the interferograms acquired is divided into areas ($A_j$) of reduced dimensions.

8. The method according to Claim 1, wherein one or more working sets $\Phi^k_{mk}$, with k={1, 2 ... L} are selected, each with a number of independent interferograms $m_1$=1:$N_1$, $m_2$=1:$N_2$ ... $m_L$=1:$N_L$.

9. The method according to Claim 8, wherein the number of mutually independent interferograms $N_1$, $N_2$ ... $N_L$ for each of the k working sets is greater than 15.

10. The method according to Claim 8, wherein at least two of said working sets $\Phi^k_{mk}$ are selected.

11. The method according to Claim 8, wherein the parameters that define the linear model in the four-dimensional space $\{Rg, Az, B_t, B_g\}$ are estimated, where Az is the direction of azimuth defined by the path of flight of the detection sensor, and Rg is the slant range direction defined by the average angle of observation of the sensor and orthogonal to the direction Az.

12. The method according to Claim 11, wherein, for each of said working sets $\Phi^k_{mk}$, the following steps are envisaged:

> i) calculating the differences of phase between pairs of close pixels within a pre-set value of distance;
> ii) dividing the range of analysis $B^k_g$ and $B^k_t$ into superimposed sub-windows;
> iii) jointly estimating the difference of height and its variation;
> iv) identifying the pairs of pixels for which the estimation of the differences of height for the different sub-windows is invariant;
> v) for each interferogram, estimating the planes in the space $\{Az, Rg\}$ using the pixels identified in step i) and attributing a weight Y(mk) as a function of the quality of the estimate;
> vi) removing the artefacts in the estimate performed in step v) through the estimation and removal of linear evolutions of the coefficients of the planes along $B_t$ and Bg optimized as a function of the weights Y(mk);
> vii) subtracting the planes in the space $\{Az, Rg\}$ from the interferograms;
> viii) for each of the sets $\Phi^k_{mk}$ and for each pixel, jointly estimating the height (q) and its variation (dq) by means of estimation on sub-windows of a broken linear evolution along $B_t$ and a linear evolution along Bg;
> ix) selecting the points that show invariant estimates of the heights for the different sub-windows;
> x) for each point P(Rg, Az) identified in step ix), constructing a neighbourhood within which the standard deviation of the estimates of the variation of height (*stddev*(dq)) performed on the points selected in step ix) and belonging to the neighbourhood is assessed;
> xi) attributing to each point P a weight w(P) that is a function of 1/*stddev* (dq);
> xii) comparing the fields of deformation $def_1$, $def_2$, ... $def_L$ obtained for each of the sets $\Phi^k_{mk}$ starting from the estimates of dq;
> xiii) generating the field def = $p_1$*$def_1$, $p_2$*$def_2$, ... $p_k$*$def_k$, ... $p_L$*$def_L$, where $p_k$ are weights that depend at least upon the weights w(P) estimated in step xi);
> xiv) subtracting the signals of the fields of deformation and of height from the interferograms; and
> xv) repeating steps v) to xiv) until the solutions obtained at the n-th iteration differ from the solutions obtained at the n-1-th iteration by an amount lower than a pre-set threshold.

Fig. 1

**EUROPEAN SEARCH REPORT**

Application Number

EP 08 42 5698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/057391 A1 (FORSLEY LAWRENCE PARKER GALLOW [US] ET AL) 17 March 2005 (2005-03-17) * abstract * * paragraph [0005] * * paragraph [0073] * ----- | 1-11 | INV. G01S13/90 |
| Y,D | WO 00/72045 A (MILANO POLITECNICO [IT]; FERRETTI ALESSANDRO [IT]; PRATI CLAUDIO [IT];) 30 November 2000 (2000-11-30) * page 9, line 21 * ----- | 1-11 | |
| A | ASKNE J ET AL: "Tree Height Influence on ERS Interferometric Phase in Boreal Forest" IEEE TRANSACTIONS ON GEOSCIENCE AND REMOTE SENSING, IEEE SERVICE CENTER, PISCATAWAY, NJ, US, vol. 43, no. 2, 1 February 2005 (2005-02-01), pages 207-217, XP011125820 ISSN: 0196-2892 * page 208, line 36 - line 53 * ----- | 1-11 | |

TECHNICAL FIELDS SEARCHED (IPC)

G01S

The present search report has been drawn up for all claims

| Place of search | Date of completion of the search | Examiner |
|---|---|---|
| The Hague | 23 April 2009 | Alberga, Vito |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 08 42 5698

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2009

| Patent document cited in search report | | Publication date | Patent family member(s) | | Publication date |
|---|---|---|---|---|---|
| US 2005057391 | A1 | 17-03-2005 | NONE | | |
| WO 0072045 | A | 30-11-2000 | AT | 256873 T | 15-01-2004 |
| | | | CA | 2374762 A1 | 30-11-2000 |
| | | | DE | 60007307 D1 | 29-01-2004 |
| | | | DE | 60007307 T2 | 21-10-2004 |
| | | | DK | 1183551 T3 | 19-04-2004 |
| | | | EP | 1183551 A1 | 06-03-2002 |
| | | | ES | 2213025 T3 | 16-08-2004 |
| | | | IT | MI991154 A1 | 27-11-2000 |
| | | | JP | 2003500658 T | 07-01-2003 |
| | | | PT | 1183551 E | 30-04-2004 |
| | | | US | 6583751 B1 | 24-06-2003 |

EPO FORM P0459

For more details about this annex : see Official Journal of the European Patent Office, No. 12/82

**REFERENCES CITED IN THE DESCRIPTION**

**Patent documents cited in the description**

- WO 2008116058 A

- WO 0072045 A